# EUROPÄISCHE PATENTSCHRIFT

(11) **EP 3 772 500 B1**
(45) Veröffentlichungstag und Bekanntmachung des Hinweises auf die Patenterteilung: **07.09.2022**
(21) Anmeldenummer: 19190128.9
(22) Anmeldetag: 05.08.2019
(51) Int. Cl.: C04B 41/80, C04B 35/04

(54) **VERFAHREN ZUR BEHANDLUNG VON MAGNESIA-KOHLENSTOFF-ERZEUGNISSEN**
METHOD FOR TREATING MAGNESIA CARBON PRODUCTS
PROCÉDÉ DE TRAITEMENT DES PRODUITS À BASE DE MAGNÉSIE-CARBONE

(43) Veröffentlichungstag der Anmeldung: 10.02.2021
(73) Patentinhaber: Refractory Intellectual Property GmbH & Co. KG, 1100 Wien (AT)
(72) Erfinder: KÖNIGSHOFER, Sandra, 8605 St. Lorenzen (AT); PIRIBAUER, Christoph, 56179 Vallendar (DE); NILICA, Roland, 8733 Sankt Marein-Feistritz (AT); LAMMER, Thomas, 8625 Turnau (AT); HEID, Stefan, 8700 Leoben (AT)
(74) Vertreter: Berkenbrink, Kai-Oliver

(56) Entgegenhaltungen:
- EP-A1- 2 998 280
- US-A- 4 140 745
- DATABASE WPI Week 201344 Thomson Scientific, London, GB; AN 2013-L37978 XP002796776, & JP 2013 126927 A (JFE STEEL CORP) 27. Juni 2013 (2013-06-27)

## Beschreibung

Die Erfindung betrifft ein Verfahren zur Behandlung von Magnesia-Kohlenstoff-Erzeugnissen.

Magnesia-Kohlenstoff-Erzeugnisse im Sinne der vorliegenden Erfindung sind Erzeugnisse, die überwiegend aus Magnesia (chemisch: MgO; mineralogisch: Periklas) und Kohlenstoff (in Form von freiem Kohlenstoff; chemisch: C) bestehen.

Ein wesentliches Einsatzgebiet solcher Magnesia-Kohlenstoff-Erzeugnisse ist deren Verwendung als feuerfestes Magnesia-Kohlenstoff-Erzeugnis, also als Verwendung solcher Magnesia-Kohlenstoff-Erzeugnisse bei hohen Temperaturen.

Eine solche Verwendung von Magnesia-Kohlenstoff-Erzeugnissen für feuerfeste Anwendungen liegt insbesondere in der Verwendung von Magnesia-Kohlenstoff-Erzeugnissen in der Stahlindustrie, wo feuerfeste Magnesia-Kohlenstoff-Erzeugnisse insbesondere als Verschleißfutter von Sauerstoffblaskonvertern, für die feuerfeste Zustellung von Elektrolichtbogenöfen und Stahlpfannen, sowie als Funktionalprodukte im Strangguss verwendet werden.

Um die Eigenschaften von Magnesia-Kohlenstoff-Erzeugnissen zu beeinflussen und insbesondere eine Oxidation des Kohlenstoffs im Magnesia-Kohlenstoff-Erzeugnis zu unterdrücken, ist es bekannt, Magnesia-Kohlenstoff-Erzeugnissen sogenannte Antioxidantien zuzugeben. Als solches Antioxidans ist insbesondere auch Aluminiumpulver bekannt. Während des betrieblichen Einsatzes des Magnesia-Kohlenstoff-Erzeugnisses reagiert das Aluminiummetallpulver mit Kohlenstoff des Magnesia-Kohlenstoff-Erzeugnisses zu Aluminiumcarbid (Al₄C₃).

Durch den betrieblichen Einsatz des Magnesia-Kohlenstoff-Erzeugnisses unterliegt dieses einem Verschleiß, so dass das Magnesia-Kohlenstoff-Erzeugnis nach einer bestimmten Zeit vom Ort seiner bestimmungsgemäßen Anwendung während des betrieblichen Einsatzes ausgebaut und durch ein neues Magnesia-Kohlenstoff-Erzeugnis ersetzt werden muss.

Das gebrauchte, ausgebaute Magnesia-Kohlenstoff-Erzeugnis besteht auch nach seinem Verschleiß noch überwiegend aus Magnesia und Kohlenstoff. Aus ökologischen und ökonomischen Gründen ist es daher grundsätzlich wünschenswert, wenn ein solches gebrauchtes Magnesia-Kohlenstoff-Erzeugnis als Rohstoff für die Herstellung von neuen Erzeugnissen, insbesondere neuen Magnesia-Kohlenstoff-Erzeugnissen zur Verfügung gestellt werden könnte. Problematisch bei der Verwendung von gebrauchten Magnesia-Kohlenstoff-Erzeugnissen als Rohstoff zur Herstellung von neuen Magnesia-Kohlenstoff-Erzeugnissen ist jedoch der Anteil an Aluminiumcarbid (Al₄C₃) im Magnesia-Kohlenstoff-Erzeugnis, der sich während des betrieblichen Einsatzes im Magnesia-Kohlenstoff-Erzeugnis gebildet hat. Denn in Gegenwart von Wasser reagiert Al₄C₃ entweder gemäß der nachfolgenden Reaktionsgleichung (I) zu Aluminiumorthohydroxid und Methan:

Al₄C₃ + 12 H₂O → 4 Al(OH)₃ + 3 CH₄↑ (Reaktionsgleichung I)

oder gemäß der nachfolgenden Reaktionsgleichung (II) zu Aluminiummetahydroxid und Methan:

Al₄C₃ + 8 H₂O → 4 AlO(OH) + 3 CH₄↑ (Reaktionsgleichung II).

Ferner zerfallen sowohl das gemäß Reaktionsgleichung I gebildete Aluminiumorthohydroxid (Al(OH)₃) als auch das gemäß Reaktionsgleichung II gebildete Aluminiummetahydroxid (AlO(OH)) unter Temperaturbeaufschlagung des Erzeugnisses in Aluminiumoxid (Al₂O₃) und Wasser (H₂O), wobei das Wasser als Wasserdampf entweicht.

Nachfolgend wird mit "Aluminiumhydroxid" zusammenfassend eines oder beide der Hydroxide Aluminiumorthohydroxid und Aluminiummetahydroxid bezeichnet.

In einem unter Verwendung eines gebrauchten Magnesia-Kohlenstoff-Erzeugnisses hergestellten feuerfesten Erzeugnis kann es gemäß den Reaktionsgleichungen I und II daher zur Bildung von Aluminiumhydroxid und Methan kommen, insbesondere beim Tempern des Erzeugnisses. Das für die Reaktion benötigte Wasser kann insbesondere als Bestandteil der verwendeten Bindemittel, aber auch als Luftfeuchtigkeit vorliegen. Während das Methan (CH₄) gasförmig entweicht, und insoweit weitgehend unproblematisch ist, ist die Bildung von Aluminiumhydroxid problematisch, da Aluminiumhydroxid gegenüber Al₄C₃ ein höheres Volumen aufweist und die Bildung von Aluminiumhydroxid daher mit einer Volumenzunahme im Erzeugnis verbunden ist. Diese Volumenzunahme kann jedoch zu Spannungen im Erzeugnis führen, die zur Beschädigung des feuerfesten Erzeugnisses führen können. Eine solche Beschädigung kann insbesondere in Form von Rissen oder Abplatzungen vorliegen, die sogar zur vollständigen Zerstörung des feuerfesten Erzeugnisses führen können. Daher kann ein unbehandeltes, gebrauchtes Magnesia-Kohlenstoff-Erzeugnis, das Anteile an Al₄C₃ umfasst, nicht oder nur in sehr geringen Mengen als Rohstoff für die Herstellung von neuen feuerfesten Erzeugnissen verwendet werden.

Es hat daher in der Vergangenheit nicht an Versuchen gefehlt, gebrauchte Magnesia-Kohlenstoff-Erzeugnisse, die Anteile an Al₄C₃ enthielten, derart zu behandeln, dass diese als Rohstoff zur Herstellung von neuen feuerfesten Erzeugnissen eingesetzt werden können.

Insbesondere wurden solche gebrauchten Magnesia-Kohlenstoff-Erzeugnisse vor ihrer Verwendung als Rohstoff zur Herstellung von feuerfesten Erzeugnissen mit flüssigem Wasser beregnet oder in ein Wasserbad getaucht, um das Al₄C₃ in Aluminiumhydroxid und Methan zu zersetzen. Allerdings reagiert Al₄C₃ hierbei nur begrenzt oder sehr langsam zu Aluminiumhydroxid, so dass erhebliche Anteile an Al₄C₃ im gebrauchten Magnesia-Kohlenstoff-Erzeugnis verbleiben oder die Reaktion bis zu mehrere Wochen Zeit in Anspruch nehmen kann, was unter wirtschaftlichen Gesichtspunkten problematisch ist. Ferner kann es bei dieser Behandlung der Magnesia-Kohlenstoff-Erzeugnisse zur Bildung von Brucit (Mg(OH)₂; Magnesiumhydroxid) im gebrauchten Magnesia-Kohlenstoff-Erzeugnis kommen. Brucit kann jedoch die Eigenschaften in einem unter Verwendung eines solchen gebrauchten Magnesia-Kohlenstoff-Erzeugnisses hergestellten Erzeugnis verschlechtern, da es insbesondere dessen Festigkeit verringern kann.

EP 2 998 280 A1 offenbart ein Verfahren zur Behandlung von kohlenstoffhaltigen feuerfesten Erzeugnissen, bei dem solche Erzeugnisse in einem Drehrohrofen mit Temperatur und einem sauerstoffhaltigen Gas derart beaufschlagt werden, dass es zu einer teilweisen Oxidation von den in den Erzeugnissen enthaltenen, oxidierbaren Bestandteilen kommt.

Der Erfindung liegt die Aufgabe zugrunde, ein Verfahren zur Behandlung von Al₄C₃ umfassenden Magnesia-Kohlenstoff-Erzeugnissen zur Verfügung zu stellen, durch welches der Anteil an Al₄C₃ im Magnesia-Kohlenstoff-Erzeugnis stärker und schneller reduziert werden kann, als dies mit den aus dem Stand der Technik bekannten Technologien möglich ist.

Eine weitere Aufgabe der Erfindung besteht darin, ein solches Verfahren zur Verfügung zu stellen, durch welches gleichzeitig die Bildung von Brucit unterdrückt werden kann.

Zur Lösung dieser Aufgabe wird erfindungsgemäß zur Verfügung gestellt ein Verfahren zur Behandlung von Magnesia-Kohlenstoff-Erzeugnissen, umfassend die folgenden Verfahrensschritte:
Zur Verfügungstellung von Magnesia-Kohlenstoff-Erzeugnissen, umfassend die folgenden Merkmale:
die Magnesia-Kohlenstoff-Erzeugnisse bestehen hauptsächlich aus Magnesia und Kohlenstoff;
die Magnesia-Kohlenstoff-Erzeugnisse umfassen Anteile an Al₄C₃;
zur Verfügungstellung von Wasser;
zur Verfügungstellung eines Gases, umfassend die folgenden Merkmale:
   das Gas umfasst Kohlenstoffdioxid;
   der Anteil an Kohlenstoffdioxid in dem Gas liegt über dem Anteil an Kohlenstoffdioxid in der Luft;
   zur Verfügungstellung eines Behälters, der einen Raum umschließt;
   Bereitstellen der Magnesia-Kohlenstoff-Erzeugnisse in dem Raum;
   Beaufschlagen des Raums mit
   Temperatur; und
   Druck
   unter gleichzeitiger Bereitstellung des Wassers und des Gases in dem Raum.

Die Erfindung beruht auf der überraschenden Erkenntnis, dass Anteile an Al₄C₃ in Magnesia-Kohlenstoff-Erzeugnissen durch das erfindungsgemäße Verfahren effektiv reduziert werden können, und zwar insbesondere auch effektiver und schneller als mit den aus dem Stand der Technik bekannten Technologien. Insbesondere wurde überraschend festgestellt, dass es mit dem erfindungsgemäßen Verfahren möglich ist, während der Durchführung des Verfahrens sämtliche Anteile an Al₄C₃ in Magnesia-Kohlenstoff-Erzeugnissen vollständig aus den Magnesia-Kohlenstoff-Erzeugnissen zu entfernen beziehungsweise in andere Stoffe umzuwandeln, insbesondere in Aluminiumhydroxid und Methan. Insbesondere wurde überraschend festgestellt, dass es mit dem erfindungsgemäßen Verfahren nicht nur möglich ist, Anteile an Al₄C₃ in Magnesia-Kohlenstoff-Erzeugnissen effektiv zu reduzieren, sondern gleichzeitig auch die Bildung von Brucit zu unterdrücken. Insbesondere beruht die Erfindung auch auf der überraschenden Erkenntnis, dass Anteile an Al₄C₃ in Magnesia-Kohlenstoff-Erzeugnissen reduziert und gleichzeitig die Bildung von Brucit unterdrückt werden kann, wenn die Magnesia-Kohlenstoff-Erzeugnisse mit Temperatur und Druck beaufschlagt werden, soweit diese Beaufschlagung unter gleichzeitiger Bereitstellung von Wasser und in einer Gasatmosphäre, in der der Anteil an Kohlenstoffdioxid (CO₂) in dem Gas über dem Anteil an Kohlenstoffdioxid in der Luft liegt, durchgeführt wird.

Nach einer besonders bevorzugten Ausführungsform des erfindungsgemäßen Verfahrens handelt es sich bei dem Behälter um einen Autoklaven. Insofern wird das Magnesia-Kohlenstoff-Erzeugnis in dem vom Autoklaven umschlossenen Raum bereitgestellt und dort unter gleichzeitiger Bereitstellung von Wasser und dem Gas mit Temperatur und Druck beaufschlagt.

Bei dem für das erfindungsgemäße Verfahren zur Verfügung gestellten Behälter in Form eines Autoklavs kann es sich grundsätzlich um einen beliebigen aus dem Stand der Technik bekannten Autoklaven handeln, in dem Erzeugnisse mit Temperatur und Druck beaufschlagbar sind. Besonders bevorzugt handelt es sich um einen Autoklaven, in dem Wasserdampf unter Überdruck zur Verfügung gestellt werden kann.

Nach einer besonders bevorzugten Ausführungsform wird der Raum mit Temperatur und Druck beaufschlagt, indem im Raum heißer Wasserdampf unter Überdruck zur Verfügung gestellt wird. Durch diesen heißen Wasserdampf kann Wasser im Raum zur Verfügung gestellt werden und der Raum gleichzeitig mit Temperatur und Druck beaufschlagt werden. Insoweit kann es sich bei dem für die Durchführung des erfindungsgemäßen Verfahrens zur Verfügung gestellten Behälter in Form eines Autoklavs beispielsweise um einen Autoklaven handeln, in dem Wasserdampf unter Überdruck zur Verfügung gestellt werden kann.

Die zur Verfügungsstellung von Wasser im Raum und das Beaufschlagen des Raumes mit Temperatur und Druck kann dabei beispielsweise durch Einleiten von heißem Wasserdampf unter Überdruck in den Raum oder durch Erzeugen von heißem Wasserdampf im Raum des Autoklavs erfolgen.

Bevorzugt wird in dem Raum eine solche Menge an Wasser bereitgestellt, dass die Anteile an Al₄C₃ in dem in dem Raum bereitgestellten Magnesia-Kohlenstoff-Erzeugnis vollständig oder zumindest weitgehend mit dem Wasser gemäß wenigstens einer der Formeln gemäß den folgenden Reaktionsgleichungen I und II entweder zu Aluminiumorthohydroxid und Methan oder zu Aluminiummetahydroxid und Methan reagieren können:

Al₄C₃ + 12 H₂O → 4 Al(OH)₃ + 3 CH₄↑ (Reaktionsgleichung I)

oder:

Al₄C₃ + 8 H₂O → 4 AlO(OH) + 3 CH₄↑ (Reaktionsgleichung II).

Das für eine vollständige Reaktion von Al₄C₃ mit Wasser benötigte Molverhältnis von Wasser zu Al₄C₃ beträgt gemäß Reaktionsgleichung I daher 12:1 und gemäß Reaktionsgleichung II daher 8:1.

Entsprechend ist bevorzugt vorgesehen, dass die Magnesia-Kohlenstoff-Erzeugnisse und das Wasser in solchen Anteilen in dem Raum bereitgestellt werden, dass in dem Raum das Molverhältnis von Wasser zu Al₄C₃ wenigstens 8:1 beträgt. Um die für eine vollständige Reaktion von Al₄C₃ mit Wasser benötigte Menge an Wasser jedoch mit Sicherheit zur Verfügung zu stellen, kann erfindungsgemäße insbesondere vorgesehen sein, dass Molverhältnis von Wasser zu Al₄C₃ wenigstens 12:1 beträgt, insbesondere geringfügig mehr als 12:1 beträgt. Erfindungsgemäß wurde jedoch festgestellt, dass es bei Wasserüberschuss, also wenn das Molverhältnis von Wasser zu Al₄C₃ wesentlich über 12:1 liegt, zur Bildung von Brucit kommen kann. Diese Bildung von Brucit kann jedoch durch die erfindungsgemäße Bereitstellung des Gases, dessen Anteil an Kohlenstoffdioxid über dem Anteil an Kohlenstoffdioxid in der Luft liegt, unterdrückt werden, zumindest, soweit das Molverhältnis von Wasser zu Al₄C₃ nicht wesentlich über 15:1 liegt. Bevorzugt liegt das Molverhältnis von Wasser zu Al₄C₃ in dem Raum bei der Durchführung des erfindungsgemäßen Verfahrens daher bei höchstens 15:1.

Bevorzugt liegt Molverhältnis von Wasser zu Al₄C₃ in dem Raum bei der Durchführung des erfindungsgemäßen Verfahrens daher im Bereich von 8:1 bis 15:1, noch bevorzugte im Bereich von 12:1 bis 15:1.

Wie oben ausgeführt kann die Unterdrückung der Bildung von Brucit während der Durchführung des erfindungsgemäßen Verfahrens insbesondere dadurch bewirkt werden, dass während der Beaufschlagung des Magnesia-Kohlenstoff-Erzeugnisses in dem Raum mit Temperatur und Druck und unter gleichzeitiger Bereitstellung von Wasser gleichzeitig zusätzlich Kohlenstoffdioxid umfassendes Gas, dessen Anteil an Kohlenstoffdioxid über dem Anteil an Kohlenstoffdioxid in der Luft liegt, bereitgestellt wird. Hierfür kann beispielsweise ein solches, Kohlenstoffdioxid umfassendes Gas in den Raum eingeleitet werden. Der Anteil an Kohlenstoffdioxid in Luft beträgt etwa 0,04 Volumen-%, so dass das für das erfindungsgemäße Verfahren zur Verfügung gestellte Gas Kohlenstoffdioxid in einem Anteil von über 0,04 Volumen-% umfasst, bezogen auf das Gesamtvolumen des Gases. Nach einer Ausführungsform wird Kohlenstoffdioxid umfassendes Gas zur Verfügung gestellt, dessen Anteil an Kohlenstoffdioxid im Bereich von 1 bis 100 Volumen-%, insbesondere im Bereich von 50 bis 100 Volumen-%, in Bezug auf das Gasvolumen, liegt. Nach einer Ausführungsform ist vorgesehen, als Kohlenstoffdioxid umfassendes Gas Kohlenstoffdioxidgas (also Gas mit einem Anteil an 100 Volumen-% Kohlenstoffdioxid) zur Verfügung zu stellen. Soweit als Behälter ein Autoklav zur Verfügung gestellt wird, kann ein solches Kohlenstoffdioxid umfassendes Gas in den vom Autoklaven umschlossenen Raum eingeleitet werden. Erfindungsgemäß wurde festgestellt, dass die Bildung von Brucit während der Durchführung des erfindungsgemäßen Verfahrens besonders wirksam dann unterdrückt werden kann, wenn in dem Raum während der Durchführung des erfindungsgemäßen Verfahrens solche Anteile an dem Kohlenstoffdioxid umfassendem Gas bereitgestellt werden, dass in dem Raum das Molverhältnis von Kohlenstoffdioxid zu Wasser 1:1 beträgt. Besonders bevorzugt beträgt in dem Raum das Molverhältnis von Kohlenstoffdioxid zu Wasser daher 1:1. Soweit dieses Verhältnis nicht genau eingehalten wird, beträgt das das Molverhältnis von Kohlenstoffdioxid zu Wasser in dem Raum bevorzugt wenigstens 1:2, noch bevorzugter wenigstens 2:3 und noch bevorzugter wenigstens 1:1. Ferner beträgt das Molverhältnis von Kohlenstoffdioxid zu Wasser in dem Raum bevorzugt höchstens 4:1, noch bevorzugter höchstens 3:1 und noch bevorzugter höchstens 2:1. Nach einer bevorzugten Ausführungsform liegt das Molverhältnis von Kohlenstoffdioxid zu Wasser in dem Raum im Bereich von 2:3 bis 3:1 und noch bevorzugter im Bereich von 1:1 bis 2:1.

Bevorzugt ist erfindungsgemäß vorgesehen, dass der Raum während der Durchführung des erfindungsgemäßen Verfahrens mit einer Temperatur im Bereich von 100 bis 320°C beaufschlagt wird, da in diesem Temperaturbereich unter gleichzeitiger, erfindungsgemäßer Beaufschlagung des Raums mit Druck und Bereitstellung von Wasser und Kohlenstoffdioxid umfassendem Gas die Bildung von Aluminiumhydroxid aus Al₄C₃ erreicht und die Bildung von Brucit unterdrückt werden kann. Erfindungsgemäß wurde ferner festgestellt, dass die Bildung von Aluminiumhydroxid aus Al₄C₃ bei einer Temperatur von wenigstens 150°C beschleunigt abläuft. Ferner wurde festgestellt, dass über einer Temperatur von 250°C die Bildung von Aluminiumhydroxid aus Al₄C₃ nicht mehr wesentlich beschleunigt wird, so dass aus ökonomischen Gründen eine Durchführung des erfindungsgemäßen Verfahrens bei maximal 250°C zweckmäßig ist. Insoweit ist nach einer besonders bevorzugten Ausführungsform vorgesehen, dass der Raum mit Temperatur im Bereich von 150 bis 250°C beaufschlagt wird.

Bevorzugt wird der Raum bei der Durchführung des erfindungsgemäßen Verfahrens mit Druck im Bereich von 0,1 bis 10 MPa, noch bevorzugter im Bereich von 0,1 bis 6 MPa und besonders bevorzugt im Bereich von 0,5 bis 6 MPa beaufschlagt. Erfindungsgemäß wurde festgestellt, dass bei der erfindungsgemäßen Beaufschlagung des Magnesia-Kohlenstoff-Erzeugnisses mit Temperatur unter gleichzeitiger Bereitstellung von Wasser und dem Gas Al₄C₃ durch Druck in diesem Bereich in Aluminiumhydroxid umgewandelt und gleichzeitig die Bildung von Brucit verhindert werden kann. Druck im Sinne der Erfindung ist Überdruck, also Druck der über den mittleren Luftdruck der Atmosphäre auf Meereshöhe hinausgeht. Im Sinne der Erfindung ist daher beispielsweise ein Druck von 0,1 MPa (entsprechend also 1 bar) ein Überdruck von 0,1 MPa, also ein Druck, der 0,1 MPa über den mittleren Luftdruck der Atmosphäre auf Meereshöhe hinausgeht.

Um bei der Durchführung des erfindungsgemäßen Verfahrens den Raum mit Druck zu beaufschlagen, kann insbesondere vorgesehen sein, gespannten Wasserdampf, also Wasserdampf unter Überdruck in den Raum einzuleiten. Alternativ kann der Raum beispielsweise auch dadurch mit Druck beaufschlagt werden, dass Wasserdampf mit Überdruck im Raum selbst erzeugt wird, beispielsweise durch Beaufschlagung des Raums oder von im Raum befindlichen Wasser mit Temperatur, beispielsweise durch eine elektrische Beheizung. Alternativ kann die Beaufschlagung des Raumes mit Druck beispielsweise auch mittels Kompressoren erfolgen. Allgemein kann zur Beaufschlagung des Raumes mit Druck auf die aus dem Stand der Technik bekannten Technologien zur Beaufschlagung eines Autoklavs mit Druck zurückgegriffen werden.

Wasser kann zur Durchführung des erfindungsgemäßen Verfahrens im Raum in wenigstens einem der folgenden Zustände zur Verfügung gestellt werden: Flüssig oder gasförmig (also in Form von Wasserdampf). Wie zuvor ausgeführt, kann zunächst flüssig im Raum bereitgestelltes Wasser im Raum mit Temperatur beaufschlagt werden und hierdurch in die Dampfphase übergehen. In Form von Wasserdampf im Raum bereitgestelltes Wasser kann beispielsweise bereits als Wasserdampf in den Raum eingeleitet werden. Grundsätzlich kann, wie zuvor ausgeführt, Wasserdampf unter Überdruck im Raum bereitgestellt werden, so dass hierdurch gleichzeitig der Raum mit Druck beaufschlagt werden kann.

Die für die Durchführung des erfindungsgemäßen Verfahrens zur Verfügung gestellten Magnesia-Kohlenstoff-Erzeugnisse bestehen hauptsächlich aus Magnesia (chemisch: MgO; mineralogisch: Periklas) und Kohlenstoff (in Form von freiem Kohlenstoff, chemisch: C). Die Magnesia-Kohlenstoff-Erzeugnisse umfassen bevorzugt einen Anteil an MgO im Bereich von wenigstens 69 Masse-% umfassen, weiter bevorzugt im Bereich von 69 bis 97 Masse-% und besonders bevorzugt im Bereich von 83 bis 93 Masse-%.

Nach einer bevorzugten Ausführungsform ist vorgesehen, dass die für die Durchführung des erfindungsgemäßen Verfahrens zur Verfügung gestellten Magnesia-Kohlenstoff-Erzeugnisse einen Anteil an Kohlenstoff von wenigstens 1 Masse-% umfassen. Weiter bevorzugt weisen die Magnesia-Kohlenstoff-Erzeugnisse einen Anteil an Kohlenstoff im Bereich von 1 bis 30 Masse-% und noch bevorzugter im Bereich von 5 bis 15 Masse-% auf.

Bevorzugt weisen die für die Durchführung des erfindungsgemäßen Verfahrens zur Verfügung gestellten Magnesia-Kohlenstoff-Erzeugnisse einen Anteil an Al₄C₃ von wenigstens 0,1 Masse-% auf. Weiter bevorzugter weisen die Magnesia-Kohlenstoff-Erzeugnisse einen Anteil an Al₄C₃ im Bereich von 0,1 bis 5 Masse-%, noch bevorzugter im Bereich von 0,5 bis 5 Masse-% und noch bevorzugter im Bereich von 1 bis 3 Masse-% auf.

Nach einer besonders bevorzugten Ausführungsform weisen die für das erfindungsgemäße Verfahren zur Verfügung gestellten Magnesia-Kohlenstoff-Erzeugnisse einen Gesamtanteil an MgO, C und Al₄C₃ von wenigstens 93 Masse-% und noch bevorzugter von wenigstens 95 Masse-% auf.

Die vorbezeichneten Anteile an MgO, Kohlenstoff und Al₄C₃ sind jeweils bezogen auf die Gesamtmasse der im Raum bereitgestellten Magnesia-Kohlenstoff-Erzeugnisse.

Die vorbezeichneten Anteile an MgO in den Magnesia-Kohlenstoff-Erzeugnissen werden bestimmt mittels Röntgenfluoressenzanalyse (RFA) gemäß DIN EN ISO 12677:2013-02.

Die vorbezeichneten Anteile an Kohlenstoff in den Magnesia-Kohlenstoff-Erzeugnissen werden bestimmt gemäß der Norm DIN EN ISO 15350:2010-08.

Ferner werden die vorbezeichneten Anteile an Al₄C₃ in den Magnesia-Kohlenstoff-Erzeugnissen qualitativ bestimmt mittels Röntgendiffraktometrie gemäß DIN EN 13925-2:2003-07. Quantitativ kann der Anteil an Al₄C₃ in den Magnesia-Kohlenstoff-Erzeugnissen bestimmt werden mittels energiedispersiver Röntgenspektroskopie (EDX) gemäß er sich ergänzenden Normen ISO 16700:2016(E) und ISO 22309:2011(E).

Nach einer besonders bevorzugten Ausführungsform werden die für die Durchführung des erfindungsgemäßen Verfahrens zur Verfügung gestellten Magnesia-Kohlenstoff-Erzeugnisse als gebrauchte Magnesia-Kohlenstoff-Erzeugnisse zur Verfügung gestellt. Gebrauchte Magnesia-Kohlenstoff-Erzeugnisse im Sinne der vorliegenden Erfindung sind solche Magnesia-Kohlenstoff-Erzeugnisse, die bereits gemäß ihrer Bestimmung, also gemäß ihrem bestimmungsgemäßen Verwendungszweck, für den sie ursprünglich hergestellt worden sind, benutzt worden sind.

Insbesondere kann es sich bei dieser Bestimmung um die Verwendung der Magnesia-Kohlenstoff-Erzeugnisse für die Zustellung, also feuerfeste Ausmauerung von Aggregaten in der Stahlindustrie (insbesondere Konverter, Elektrolichtbogenöfen oder Pfannen) oder um die Verwendung der Magnesia-Kohlenstoff-Erzeugnisse als Funktionalprodukte für die Stahlindustrie, insbesondere für den Strangguss, insbesondere in Form von Spül- oder Abstichkeramiken, handeln. Nachdem die Magnesia-Kohlenstoff-Erzeugnisse insoweit eine Zeit lang am Ort ihrer bestimmungsgemäßen Verwendung eingesetzt worden sind, werden Sie ausgebaut und durch neue Magnesia-Kohlenstoff-Erzeugnisse ersetzt. Der Ausbau erfolgt insbesondere auf Grund eines Verschleißes der Magnesia-Kohlenstoff-Erzeugnisse. Bei diesen ausgebauten Magnesia-Kohlenstoff-Erzeugnissen kann es sich um die für die Durchführung des erfindungsgemäßen Verfahrens zur Verfügung gestellten, gebrauchten Magnesia-Kohlenstoff-Erzeugnisse handeln. Insofern kann das erfindungsgemäße Verfahren den folgenden weiteren, dem Verfahrensschritt, wonach die Magnesia-Kohlenstoff-Erzeugnisse für das erfindungsgemäße Verfahren zur Verfügung gestellt werden, vorangestellten Verfahrensschritt umfassen:
Ausbau eines gebrauchten Magnesia-Kohlenstoff-Erzeugnisses vom Ort seiner bestimmungsgemäßen Verwendung.

Dieses ausgebaute, gebrauchte Magnesia-Kohlenstoff-Erzeugnis kann anschließend für das erfindungsgemäße Verfahren zur Verfügung gestellt werden.

Die für die Durchführung des erfindungsgemäßen Verfahrens zur Verfügung gestellten Magnesia-Kohlenstoff-Erzeugnisse werden erfindungsgemäß in dem vom Behälter umschlossenen Raum bereitgestellt beziehungsweise angeordnet. Nachdem die Magnesia-Kohlenstofferzeugnisse in dem Raum bereitgestellt sind, wird der Raum erfindungsgemäß mit Druck und Temperatur beaufschlagt. Bevorzugt kann vorgesehen sein, dass der vom Behälter umschlossene Raum nach Bereitstellen der Magnesia-Kohlenstoff-Erzeugnisse in dem Raum gasdicht verschlossen und anschließend mit Temperatur und Druck beaufschlagt wird. Wie oben ausgeführt, kann Wasser, insbesondere in flüssiger Form, in dem Raum bereitgestellt werden, bevor dieser mit Temperatur und Druck beaufschlagt wird. Bevorzugt kann Wasser jedoch, wie oben ausgeführt, insbesondere in Form von Wasserdampf, unter gleichzeitiger Beaufschlagung des Raums mit Temperatur und Druck, im Raum bereitgestellt beziehungsweise in diesen eingeleitet werden. Ferner kann, wie oben ausgeführt, das Kohlenstoffdioxid umfassende Gas insbesondere während der Beaufschlagung des Raums mit Temperatur und Druck im Raum bereitgestellt beziehungsweise in diesen eingeleitet werden.

Wie oben ausgeführt, wird der Raum derart mit Temperatur und Druck beaufschlagt, dass sich während der Beaufschlagung zumindest ein Anteil des Al₄C₃ in den Magnesia-Kohlenstoff-Erzeugnissen zersetzt. Besonders bevorzugt wird der Raum derart mit Temperatur und Druck beaufschlagt, dass sich während der Beaufschlagung das Al₄C₃ in den Magnesiakohlenstofferzeugnissen überwiegend zersetzt.

Dabei zersetzt sich das Al₄C₃ während der Beaufschlagung des Raumes mit Temperatur und Druck insbesondere in Aluminiumhydroxid und CH₄.

Die durch das erfindungsgemäße Verfahren behandelten Magnesia-Kohlenstoff-Erzeugnisse weisen nach ihrer Behandlung einen deutlich reduzierten Anteil oder auch gar keine messbaren Anteile mehr an Al₄C₃ auf. Gleichzeitig kann während der Durchführung des erfindungsgemäßen Verfahrens die Bildung von Brucit unterdrückt werden, so dass die durch das erfindungsgemäße Verfahren behandelten Magnesia-Kohlenstoff-Erzeugnisse keine oder nur sehr geringe Anteile an Brucit aufweisen. Hierdurch eignen sich die durch das erfindungsgemäße Verfahren behandelten Magnesia-Kohlenstoff-Erzeugnisse hervorragend als Rohstoffe für die Herstellung von feuerfesten Erzeugnissen.

Insofern kann das erfindungsgemäße Verfahren die weiteren, im Verfahrensschritt der Beaufschlagung des Raumes mit Temperatur und Druck nachgeordneten Verfahrensschritte aufweisen:
Fördern der Magnesia-Kohlenstoff-Erzeugnisse aus dem Raum;
Mischen der Magnesia-Kohlenstoff-Erzeugnisse mit einem oder mehreren weiteren Stoffen zu einem Versatz;
Herstellen eines feuerfesten Erzeugnisses aus dem Versatz.

Bei dem hergestellten feuerfesten Erzeugnis kann es sich insbesondere um ein neues Magnesia-Kohlenstoff-Erzeugnis handeln.

Weitere Merkmale der Erfindung ergeben sich aus den Ansprüchen sowie den nachfolgend beschriebenen Ausführungsbeispielen der Erfindung.

Sämtliche Merkmale der Erfindung können, einzeln oder in Kombination, beliebig miteinander kombiniert sein.

### Ausführungsbeispiel

Ein Magnesia-Kohlenstoff-Erzeugnis in Form eines feuerfesten Magnesia-Kohlenstoff-Steines wurde bereitgestellt. Um den Gebrauch dieses Magnesia-Kohlenstoff-Steines in einem Aggregat der Stahlindustrie zu simulieren, wurde der Magnesia-Kohlenstoff-Stein mit einem Zusatz von 3 Masse-% Aluminiumgrieß (bezogen auf 100 Masse-% aus Magnesia und Kohlenstoff des Magnesia-Kohlenstoff-Steins) als Antioxidans bei 1.000°C für 6 Stunden unter reduzierender Atmosphäre verkokt.

Das danach erhaltene Magnesia-Kohlenstoff-Erzeugnis wurde für die Durchführung des erfindungsgemäßen Verfahrens zur Verfügung gestellt. Dieses Magnesia-Kohlenstoff-Erzeugnis wies die folgende chemische Zusammensetzung auf, die mittels Röntgenfluoressenzanalyse (RFA) gemäß DIN EN ISO 12677:2013-02 bestimmt wurde:

| | |
|---|---|
| MgO: | 92,6 Masse-% |
| Al₂O₃: | 5,0 Masse-% |
| SiO₂: | 0,8 Masse-% |
| CaO: | 1,0 Masse-% |
| Fe₂O₃: | 0,6 Masse-% |

Zusätzlich zu diesen Verbindungen wurde der Glühverlust mit 8,8 Masse-% bestimmt, bezogen auf die Masse der Verbindungen ohne den Glühverlust.

Die vorbezeichneten Massenangaben sind jeweils bezogen auf die Gesamtmasse des Magnesia-Kohlenstoff-Erzeugnisses.

Der Anteil an Kohlenstoff wurde mittels eines Kohlenstoffanalysators des Typs LECO CS-200/230 (Markeninhaber und Herstellerin LECO Instrumente GmbH, Mönchengladach, Deutschland) gemäß der Norm DIN EN ISO 15350:2010-08 bestimmt mit 8,2 Masse-%, bezogen auf die Gesamtmasse des Magnesia-Kohlenstoff-Erzeugnisses.

Schließlich wurde der Anteil an Al₄C₃ im Magnesia-Kohlenstoff-Erzeugnis zunächst qualitativ bestimmt mittels Röntgendiffraktometrie gemäß DIN EN 13925-2:2003-07 und anschließend quantitativ bestimmt mittels energiedispersiver Röntgenspektroskopie (EDX) gemäß der sich ergänzenden Normen ISO 16700:2016(E) und ISO 22309:2011(E) auf 1,9 Masse-%, wiederrum bezogen auf die Gesamtmasse des Magnesia-Kohlenstoff-Erzeugnisses.

Das Kohlenstofferzeugnis wurde zusammen mit flüssigem Wasser in den Raum eines handelsüblichen, industriellen Autoklavs eingegeben und der Raum anschließend gasdicht verschlossen.

Anschließend wurde der Raum mit Überdruck von 3 MPa und einer Temperatur von 200°C beaufschlagt. Durch die Temperatur bildete das in den Raum eingegebene Wasser eine Wasserdampfatmosphäre in dem Raum aus.

Gleichzeitig wurde in den Raum ein Kohlenstoffdioxid umfassendes Gas in Form von reinem Kohlenstoffdioxidgas eingeleitet.

Das Wasser wurde in einer solchen Masse in den Raum eingegeben (und lag anschließend als Wasserdampf in einer solchen Masse in dem Raum vor), die 3 % der Masse der in dem Raum bereitgestellten Magnesia-Kohlenstoff-Erzeugnisses entsprach. Damit lag das Molverhältnis von Wasser zu Al₄C₃ in dem Raum geringfügig über 12:1.

Ferner wurde das Kohlenstoffdioxidgas in einer solchen Masse in den Raum eingeleitet, dass das Molverhältnis von Kohlenstoffdioxid zu Wasser in dem Raum 1:1 betrug.

Diese Beaufschlagung des Raums mit Temperatur und Druck bei gleichzeitiger Bereitstellung von Kohlenstoffdioxidgas und Wasserdampf wurde für eine Dauer von 12 Stunden aufrechterhalten.

Während dieser Behandlung des Magnesia-Kohlenstoff-Erzeugnisses wurde das darin vorhandene Al₄C₃ in Aluminiumhydroxid und CH₄ zersetzt. Gleichzeitig konnte eine Umwandlung von MgO in Brucit unterdrückt werden.

Nach der Behandlung des Magnesia-Kohlenstoff-Erzeugnisses in dem Raum wurde dieses aus dem Raum gefördert und der Anteil an Al₄C₃ im Magnesia-Kohlenstoff-Erzeugnis erneut mittels Röntgendiffraktometrie bestimmt. Danach konnte kein Al₄C₃ mehr im Magnesia-Kohlenstoff-Erzeugnis nachgewiesen werden.

Ferner wurde der Anteil an Brucit im Magnesia-Kohlenstoff-Erzeugnis mittels Röntgendiffraktometrie gemäß der Norm DIN EN 13925-2:2003-07 bestimmt. Danach konnte eine Anwesenheit von Brucit nicht festgestellt werden.

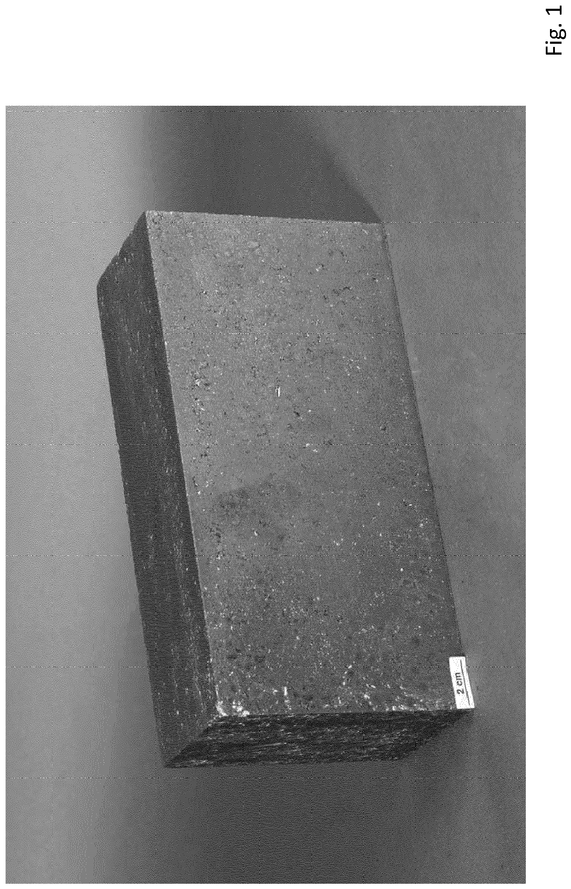

Das aus dem Raum geförderte Magnesia-Kohlenstoff-Erzeugnis wurde mit weiteren Stoffen in Form von Magnesia und Graphit zu einem Versatz gemischt. In dem Versatz betrug der Anteil der durch das erfindungsgemäße Verfahren behandelten Magnesia-Kohlenstoff-Erzeugnisse 30 Masse-%, bezogen auf die Gesamtmasse des Versatzes. Anschließend wurde aus dem Versatz ein feuerfestes Erzeugnis in Form eines neuen Magnesia-Kohlenstoff-Erzeugnisses hergestellt. Hierzu wurde der Versatz zu einem Magnesia-Kohlenstoff-Stein gepresst und anschließend bei einer Temperatur von 200°C für eine Dauer von 6 Stunden getempert. Das danach erhaltene feuerfeste Erzeugnis in Form des Magnesiakohlenstoffsteins ist in Figur 1 dargestellt. Deutlich zu erkennen ist, dass der Magnesia-Kohlenstoff-Steingemäß Figur 1 keinerlei Risse oder Abplatzungen aufweist.

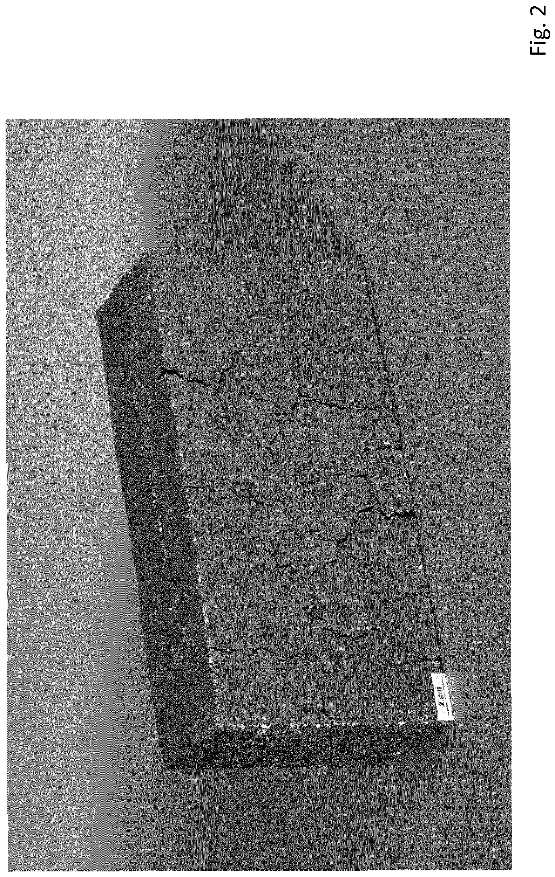

Zu Vergleichszwecken wurde ein weiterer Magnesia-Kohlenstoff-Stein hergestellt. Dieser wurde entsprechend dem vorbeschriebenen Magnesia-Kohlenstoff-Stein (MgO-C-Stein) hergestellt, jedoch mit dem einzigen Unterschied, dass statt des gemäß dem Ausführungsbeispiel behandelten Magnesia-Kohlenstoff-Erzeugnisses das unbehandelte, für das Ausführungsbeispiel zur Verfügung gestellte, unbehandelte Magnesia-Kohlenstoff-Erzeugnis für die Herstellung verwendet wurde. Der danach erhaltene Magnesia-Kohlenstoff-Stein ist in Figur 2 dargestellt. Deutlich zu erkennen ist, dass dieser Stein erhebliche Risse aufweist, wodurch die Eigenschaften des Steins erheblich nachteilig beeinträchtigt sind.

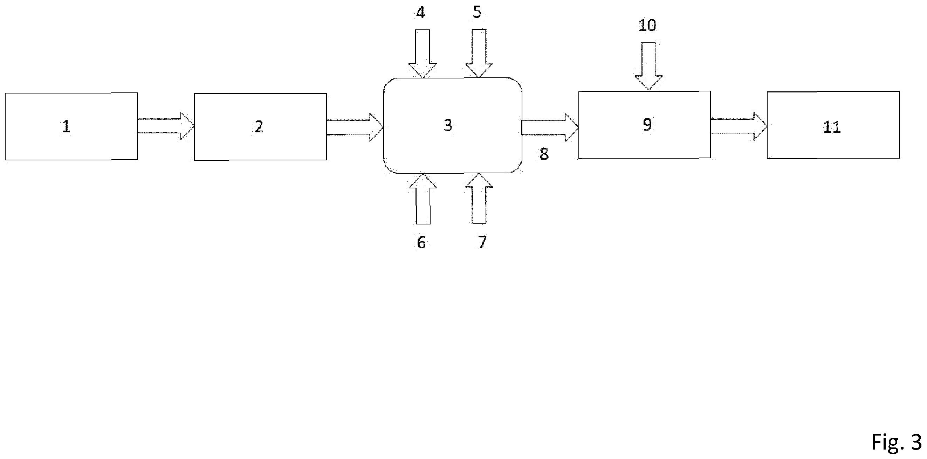

In Figur 3 ist ein stark schematisiertes Fließschema eines weiteren Ausführungsbeispiels des erfindungsgemäßen Verfahrens dargestellt.

Danach wurde gemäß Bezugszeichen 1 zunächst ein gebrauchtes Magnesiakohlenstofferzeugnis aus einer Stahlpfanne ausgebaut und gemäß Bezugszeichen 2 für die Durchführung eines erfindungsgemäßen Verfahrens zur Verfügung gestellt. Das gemäß 2 zur Verfügung gestellte Magnesiakohlenstofferzeugnis wurde anschließend zusammen mit Wasser 4 in dem von einem Autoklaven 3 umschlossenen Raum bereitgestellt und der Raum gasdicht verschlossen.

Ferner wurde ein Kohlenstoffdioxid umfassendes Gas 5, dessen Anteil an Kohlenstoffdioxid über dem Anteil an Kohlenstoffdioxid in der Luft lag, bereitgestellt.

Anschließend wurde der Raum mit Temperatur 6 und Druck 7 beaufschlagt. Ferner wurde gleichzeitig das Kohlenstoffdioxid umfassende Gas 5 in den Raum eingeleitet.

Nach der entsprechenden Behandlung des Magnesiakohlenstofferzeugnisses 2 in dem Raum des Autoklaven 3 wurde dieses gemäß 8 aus dem Raum des Autoklaven 3 befördert und mit weiteren Stoffen 10 zu einem Versatz 9 gemischt. Aus dem Versatz 9 wurde schließlich ein neues feuerfestes Erzeugnis 11 hergestellt.

## Patentansprüche

1. Verfahren zur Behandlung von Magnesia-Kohlenstoff-Erzeugnissen, umfassend die folgenden Verfahrensschritte:
A. Zur Verfügungstellung von Magnesia-Kohlenstoff-Erzeugnissen, umfassend die folgenden Merkmale:
A.1 die Magnesia-Kohlenstoff-Erzeugnisse bestehen hauptsächlich aus Magnesia und Kohlenstoff;
A.2 die Magnesia-Kohlenstoff-Erzeugnisse umfassen Anteile an Al₄C₃;
B. zur Verfügungstellung von Wasser;
C. zur Verfügungstellung eines Gases, umfassend die folgenden Merkmale:
C.1 das Gas umfasst Kohlenstoffdioxid;
C.2 der Anteil an Kohlenstoffdioxid in dem Gas liegt über dem Anteil an Kohlenstoffdioxid in der Luft;
D. zur Verfügungstellung eines Behälters, der einen Raum umschließt;
E. Bereitstellen der Magnesia-Kohlenstoff-Erzeugnisse in dem Raum;
F. Beaufschlagen des Raums mit
F.1 Temperatur; und
F.2 Druck
unter gleichzeitiger Bereitstellung des Wassers und des Gases in dem Raum.

2. Verfahren nach Anspruch 1, wobei die Magnesia-Kohlenstoff-Erzeugnisse gebrauchte Magnesia-Kohlenstoff-Erzeugnisse sind.

3. Verfahren nach wenigstens einem der vorhergehenden Ansprüche, wobei die Magnesia-Kohlenstoff-Erzeugnisse und das Wasser in solchen Anteilen in dem Raum bereitgestellt werden, dass in dem Raum das Molverhältnis von Wasser zu Al₄C₃ wenigstens 8 zu 1 beträgt.

4. Verfahren nach wenigstens einem der vorhergehenden Ansprüche, wobei das Gas und das Wasser in solchen Anteilen in dem Raum bereitgestellt werden, dass in dem Raum das Molverhältnis von Kohlenstoffdioxid zu Wasser wenigstens 1 zu 1 beträgt.

5. Verfahren nach wenigstens einem der vorhergehenden Ansprüche, wobei der Raum mit Temperatur im Bereich von 100 bis 320°C beaufschlagt wird.

6. Verfahren nach wenigstens einem der vorhergehenden Ansprüche, wobei der Raum mit Druck im Bereich von 0,1 bis 6 MPa beaufschlagt wird.

7. Verfahren nach wenigstens einem der vorhergehenden Ansprüche, wobei das Gas Kohlenstoffdioxidgas ist.

8. Verfahren nach wenigstens einem der vorhergehenden Ansprüche, wobei der vom Behälter umschlossene Raum nach Bereitstellen der Magnesia-Kohlenstoff-Erzeugnisse in dem Raum gasdicht verschlossen wird.

9. Verfahren nach wenigstens einem der vorhergehenden Ansprüche, wobei der Behälter ein Autoklav ist.

10. Verfahren nach wenigstens einem der vorhergehenden Ansprüche, wobei die Magnesia-Kohlenstoff-Erzeugnisse einen Anteil an Al₄C₃ von wenigstens 0,1 Masse-% umfassen, bezogen auf die Gesamtmasse der Magnesia-Kohlenstoff-Erzeugnisse.

11. Verfahren nach wenigstens einem der vorhergehenden Ansprüche, wobei die Magnesia-Kohlenstoff-Erzeugnisse einen Anteil an MgO von wenigstens 69 Masse-% umfassen, bezogen auf die Gesamtmasse der Magnesia-Kohlenstoff-Erzeugnisse.

12. Verfahren nach wenigstens einem der vorhergehenden Ansprüche, wobei die Magnesia-Kohlenstoff-Erzeugnisse einen Anteil an Kohlenstoff von wenigstens 1 Masse-% umfassen, bezogen auf die Gesamtmasse der Magnesia-Kohlenstoff-Erzeugnisse.

13. Verfahren nach wenigstens einem der vorhergehenden Ansprüche, wobei der Raum derart mit Temperatur und Druck beaufschlagt wird, dass sich während der Beaufschlagung zumindest ein Teil des Al₄C₃ zersetzt.

14. Verfahren nach Anspruch 13, wobei das zersetzte Al₄C₃ zumindest teilweise zu Aluminiumhydroxid reagiert.

15. Verfahren nach wenigstens einem der vorhergehenden Ansprüche, umfassend die folgenden weiteren Verfahrensschritte:
G. Fördern der Magnesia-Kohlenstoff-Erzeugnisse aus dem Raum;
H. Mischen der Magnesia-Kohlenstoff-Erzeugnisse mit einem oder mehreren weiteren Stoffen zu einem Versatz;
I. Herstellen eines feuerfesten Erzeugnisses aus dem Versatz.

## Claims

1. A method for the treatment of magnesia-carbon products, comprising the following method steps:
A. Providing magnesia-carbon products comprising the following features:
A.1 the magnesia-carbon products consist mainly of magnesia and carbon;
A.2 the magnesia-carbon products comprise proportions of Al₄C₃;
B. providing water;
C. providing a gas comprising the following features:
C.1 the gas comprises carbon dioxide;
C.2 the proportion of carbon dioxide in the gas is above the proportion of carbon dioxide in the air;
D. providing a container that encloses a space;
E. providing the magnesia carbon products in the space;
F. subjecting the space to
F.1 temperature; and
F.2 pressure
while providing the water and the gas in the space.

2. The method of claim 1, wherein the magnesia-carbon products are used magnesia-carbon products.

3. The method according to at least one of the preceding claims, wherein the magnesia-carbon products and the water are provided in the space in such proportions that in the space the molar ratio of water to Al₄C₃ is at least 8 to 1.

4. The method according to at least one of the preceding claims, wherein the gas and the water are provided in such proportions in the space that in the space the molar ratio of carbon dioxide to water is at least 1 to 1.

5. The method according to at least one of the preceding claims, wherein the space is subjected to temperature in the range of 100 to 320°C.

6. The method according to at least one of the preceding claims, wherein the space is subjected to pressure in the range of 0.1 to 6 MPa.

7. The method according to at least one of the preceding claims, wherein the gas is carbon dioxide gas.

8. The method according to at least one of the preceding claims, wherein the space enclosed by the container is sealed gas-tight after providing the magnesia-carbon products in the space.

9. The method according to at least one of the preceding claims, wherein the container is an autoclave.

10. The method according to at least one of the preceding claims, wherein the magnesia-carbon products comprise an Al₄C₃ content of at least 0.1 % by mass, based on the total mass of the magnesia-carbon products.

11. The method according to at least one of the preceding claims, wherein the magnesia-carbon products comprise a proportion of MgO of at least 69 % by mass, based on the total mass of the magnesia-carbon products.

12. The method according to at least one of the preceding claims, wherein the magnesia-carbon products comprise a carbon content of at least 1 % by mass, based on the total mass of the magnesia-carbon products.

13. The method according to at least one of the preceding claims, wherein the space is subjected to temperature and pressure such that at least a portion of the Al₄C₃ decomposes during the subjection.

14. The method according to claim 13, wherein the decomposed Al₄C₃ reacts at least partially to form aluminum hydroxide.

15. The method according to at least one of the preceding claims, comprising the following further process steps:
G. Conveying the magnesia-carbon products from the room;
H. mixing the magnesia-carbon products with one or more further substances to form a batch;
I. producing a refractory product from the batch.

## Revendications

1. Procédé de traitement de produits de magnésie-carbone, comprenant les étapes suivantes du procédé :
A. la fourniture de produits de magnésie-carbone comprenant les caractéristiques suivantes :
A.1 les produits de magnésie-carbone se composent essentiellement de magnésie et de carbone ;
A.2 les produits de magnésie-carbone comprennent des parts d'Al₄C₃ ;
B. la fourniture d'eau ;
C. la fourniture d'un gaz comprenant les caractéristiques suivantes :
C.1 le gaz comprend du dioxyde de carbone ;
C.2 la teneur en dioxyde de carbone dans le gaz est supérieure à la teneur en dioxyde de carbone dans l'air ;
D. la fourniture d'un récipient qui enferme un espace ;
E. la fourniture des produits de magnésie-carbone dans l'espace ;
F. l'application de
F.1 température ; et de
F.2 pression
à l'espace en fournissant simultanément l'eau et le gaz dans l'espace.

2. Procédé selon la revendication 1, dans lequel les produits de magnésie-carbone sont des produits de magnésie-carbone usagés.

3. Procédé selon l'une au moins des revendications précédentes, dans lequel les produits de magnésie-carbone et l'eau sont fournis dans l'espace dans des proportions telles, que le rapport molaire entre l'eau et l'Al₄C₃ dans l'espace est au moins de 8 à 1.

4. Procédé selon l'une au moins des revendications précédentes, dans lequel le gaz et l'eau sont fournis dans l'espace dans des proportions telles, que le rapport molaire entre le dioxyde de carbone et l'eau dans l'espace est au moins de 1 à 1.

5. Procédé selon l'une au moins des revendications précédentes, dans lequel une température dans la plage de 100 à 320°C est appliquée à l'espace.

6. Procédé selon l'une au moins des revendications précédentes, dans lequel une pression dans la plage de 0,1 à 6 MPa est appliquée à l'espace.

7. Procédé selon l'une au moins des revendications précédentes, dans lequel le gaz est du gaz de dioxyde de carbone.

8. Procédé selon l'une au moins des revendications précédentes, dans lequel l'espace enfermé par le récipient est fermé de manière étanche au gaz après la fourniture des produits de magnésie-carbone dans l'espace.

9. Procédé selon l'une au moins des revendications précédentes, dans lequel le récipient est un autoclave.

10. Procédé selon l'une au moins des revendications précédentes, dans lequel les produits de magnésie-carbone comprennent une proportion d'Al₄C₃ d'au moins 0,1% en masse par rapport à la masse totale des produits de magnésie-carbone.

11. Procédé selon l'une au moins des revendications précédentes, dans lequel les produits de magnésie-carbone comprennent une proportion de MgO d'au moins 69% en masse par rapport à la masse totale des produits de magnésie-carbone.

12. Procédé selon l'une au moins des revendications précédentes, dans lequel les produits de magnésie-carbone comprennent une proportion de carbone d'au moins 1% en masse par rapport à la masse totale des produits de magnésie-carbone.

13. Procédé selon l'une au moins des revendications précédentes, dans lequel une température et une pression sont appliquées à l'espace de telle sorte que pendant l'application, au moins une partie de l'Al₄C₃ se décompose.

14. Procédé selon la revendication 13, dans lequel l'Al₄C₃ décomposé réagit au moins partiellement à l'hydroxyde d'aluminium.

15. Procédé selon l'une au moins des revendications précédentes, comprenant les autres étapes suivantes du procédé :
G. le transport des produits de magnésie-carbone hors de l'espace ;
H. le mélange des produits de magnésie-carbone avec une ou plusieurs autres substances pour donner une pâte ;
I. la fabrication d'un produit réfractaire à partir de la pâte.
